(19) Europäisches Patentamt
European Patent Office
Office européen des brevets

(11) **EP 4 759 612 A1**

(12) **EUROPEAN PATENT APPLICATION**
published in accordance with Art. 153(4) EPC

(43) Date of publication:
**17.06.2026 Bulletin 2026/25**

(21) Application number: **24867572.0**

(22) Date of filing: **20.09.2024**

(51) International Patent Classification (IPC):
**B60L 3/12** *(2006.01)*   **B60L 58/12** *(2019.01)*

(52) Cooperative Patent Classification (CPC):
**B60L 3/12; B60L 58/12**

(86) International application number:
**PCT/CN2024/120150**

(87) International publication number:
**WO 2025/061167 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 CN 202311230198**

(71) Applicant: **VOYAH Automotive Technology Co., Ltd.**
**Wuhan, Hubei 430109 (CN)**

(72) Inventors:
• **CHEN, Wu**
**Wuhan, Hubei 430050 (CN)**
• **TIAN, Chun**
**Wuhan, Hubei 430050 (CN)**
• **WANG, Yang**
**Wuhan, Hubei 430050 (CN)**

(74) Representative: **WSL Patentanwälte Partnerschaft mbB**
**Kaiser-Friedrich-Ring 98**
**65185 Wiesbaden (DE)**

(54) **METHOD AND APPARATUS FOR ACQUIRING AVERAGE ELECTRICITY CONSUMPTION, AND MEDIUM AND ELECTRONIC DEVICE**

(57)    A method for acquiring an average electricity consumption. The method comprises: acquiring a consumed electric quantity and a charged electric quantity of a battery pack within a preset time period, and acquiring a first travel mileage of a vehicle within the preset time period; acquiring an incremental electric quantity of the vehicle within the preset time period and a second travel mileage corresponding to the incremental electric quantity; on the basis of the incremental electric quantity, and the consumed electric quantity and the charged electric quantity of the battery pack within the preset time period, obtaining a consumed electric quantity of the vehicle within the preset time period; on the basis of the first travel mileage and the second travel mileage, obtaining a third travel mileage within the preset time period, wherein the third travel mileage is a travel mileage corresponding to the consumed electric quantity of the vehicle within the preset time period; and on the basis of the consumed electric quantity and the third travel mileage of the vehicle within the preset time period, obtaining an average power consumption of the vehicle within the preset time period. The method for acquiring an average power consumption can solve the technical problem of the calculation of an average power consumption being inaccurate. An apparatus for acquiring an average power consumption, and a medium and an electronic device are further comprised.

| |
|---|
| Acquiring a power consumption and a charging amount of a battery pack within a preset time period, and a first travel mileage of a vehicle within the preset time period — S1 |
| Acquiring an incremental charge of the vehicle within the preset time period and a second travel mileage corresponding to the incremental charge — S2 |
| On the basis of the incremental charge, and the power consumption and the charging amount of the battery pack within the preset time period, obtaining a power consumption of the vehicle within the preset time period — S3 |
| On the basis of the first travel mileage and the second travel mileage, obtaining a third travel mileage of the vehicle within the preset time period, wherein the third travel mileage is a travel mileage corresponding to the power consumption of the vehicle within the preset time period — S4 |
| On the basis of the power consumption and the third travel mileage of the vehicle within the preset time period, obtaining an average power consumption of the vehicle within the preset time period — S5 |

**FIG. 1**

**Description**

**CROSS-REFERENCE TO RELATED APPLICATIONS**

This application claims the priority of the Chinese patent application with the application number 202311230198.8 filed on September 21, 2023, the entire content of which is incorporated herein by reference.

**TECHNICAL FIELD**

The present disclosure relates to the technical field of electric vehicles, and in particular, to a method, an apparatus, a medium and an electronic device for acquiring average power consumption.

**BACKGROUND ART**

A hybrid electric vehicle refers to a vehicle whose driving system is jointly composed of two or more individual driving systems that can operate simultaneously, and the driving power of the vehicle is provided by a single driving system alone or by multiple driving systems together according to the actual driving state of the vehicle.

Hybrid electric vehicles generally include three types: series hybrid electric vehicles, parallel hybrid electric vehicles and series-parallel hybrid electric vehicles. A series hybrid electric vehicle mainly has a power system of a Hybrid Electric Vehicle (HEV) composed of an engine, a generator and a drive motor, the three major power assemblies, in a series manner. For a parallel hybrid electric vehicle, both the engine and the drive motor are power assemblies, and the power of the two major power assemblies can be superimposed for output or output independently. A series-parallel hybrid electric vehicle is an electric vehicle integrating the series structure and the parallel structure, and is mainly composed of three major power assemblies including an engine, a motor-generator and a drive motor.

The average power consumption of a hybrid electric vehicle can be used to evaluate the power economy of the hybrid electric vehicle. The method for calculating the average power consumption of a hybrid electric vehicle in the related art fails to take into account the incremental charge provided by the engine in the series or parallel mode, resulting in the power consumption displayed on the instrument panel being higher than the actual power consumption of the vehicle, which is not conducive to the accurate calculation of the average power consumption of the hybrid electric vehicle.

**SUMMARY**

In view of the above, the present disclosure provides a method, an apparatus, a medium and an electronic device for acquiring average power consumption, which are intended to solve the technical problem of inaccurate calculation of average power consumption of hybrid electric vehicles.

Other features and advantages of the present disclosure will become apparent from the following detailed description, or be partially learned through the practice of the present disclosure.

In a first aspect of the present disclosure, a method for acquiring an average power consumption is provided, which includes: acquiring a power consumption and a charging amount of a battery pack within a preset time period, and a first travel mileage of a vehicle within the preset time period; acquiring an incremental charge of the vehicle within the preset time period and a second travel mileage corresponding to the incremental charge; obtaining a power consumption of the vehicle within the preset time period on the basis of the incremental charge, and the power consumption and the charging amount of the battery pack within the preset time period; obtaining a third travel mileage of the vehicle within the preset time period on the basis of the first travel mileage and the second travel mileage, the third travel mileage being a travel mileage corresponding to the power consumption of the vehicle within the preset time period; and obtaining an average power consumption of the vehicle within the preset time period on the basis of the power consumption and the third travel mileage of the vehicle within the preset time period.

In a second aspect of the present disclosure, an apparatus for acquiring an average power consumption is provided, which includes: a first acquisition unit configured to acquire a power consumption and a charging amount of a battery pack within a preset time period, and a first travel mileage of a vehicle within the preset time period; a second acquisition unit configured to acquire an incremental charge of the vehicle within the preset time period and a second travel mileage corresponding to the incremental charge; a first obtaining unit configured to obtain a power consumption of the vehicle within the preset time period on the basis of the incremental charge, and the power consumption and the charging amount of the battery pack within the preset time period; a second obtaining unit configured to obtain a third travel mileage of the vehicle within the preset time period on the basis of the first travel mileage and the second travel mileage, the third travel mileage being a travel mileage corresponding to the power consumption of the vehicle within the preset time period; and a third obtaining unit configured to obtain an average power consumption of the vehicle within the preset time period on the basis of the power consumption and the third travel mileage of the vehicle within the preset time period.

In a third aspect of the present disclosure, a computer-readable storage medium is further provided, on which a computer program is stored, the computer program including executable instructions that, when executed by a processor, cause the processor to implement the method for acquiring an average power consumption according to any embodiment of the first aspect.

In a fourth aspect of the present disclosure, an electronic device is further provided, which includes: one or more processors; and a memory for storing executable instructions of the processor(s), where the executable instructions, when executed by the one or more processors, enable the one or more processors to implement the method for acquiring an average power consumption according to any embodiment of the first aspect.

In a fifth aspect of the present disclosure, a computer program product is further provided, which includes computer instructions that, when executed by a processor, implement the method for acquiring an average power consumption according to any embodiment of the first aspect.

It should be understood that the foregoing general description and the following detailed description are merely exemplary and explanatory, and are not intended to limit the present disclosure.

## BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure. Obviously, the drawings in the following description are only some embodiments of the present disclosure, and other drawings may be obtained by those skilled in the art without creative efforts from these drawings.

FIG. 1 is a flow chart of a method for acquiring average power consumption according to some embodiments of the present disclosure.
FIG. 2 is a block diagram of an apparatus for acquiring average power consumption according to some embodiments of the present disclosure.
FIG. 3 is a schematic diagram of a computer-readable storage medium according to some embodiments of the present disclosure.
FIG. 4 is a structural schematic diagram of an electronic device according to some embodiments of the present disclosure.

## DETAILED DESCRIPTION OF THE EMBODIMENTS

The technical solutions in the embodiments of the present disclosure will be described clearly and completely below in conjunction with the accompanying drawings in the embodiments of the present disclosure. Obviously, the described embodiments are only a part of the embodiments of the present disclosure, rather than all the embodiments. All other embodiments obtained by those skilled in the art without creative work based on the embodiments of the present disclosure shall fall within the protection scope of the present disclosure.

In addition, the described features, structures or characteristics may be combined in any suitable manner in one or more embodiments. In the following description, numerous specific details are provided to give a full understanding of the embodiments of the present disclosure. However, those skilled in the art will appreciate that the technical solutions of the present disclosure may be practiced without one or more of the specific details, or may be practiced using other methods, components, apparatuses, steps and the like. In other cases, well-known methods, apparatuses, implementations or operations are not shown or described in detail to avoid obscuring various aspects of the present disclosure.

The block diagrams shown in the accompanying drawings are merely functional entities, and do not necessarily correspond to physically independent entities. That is, these functional entities may be implemented in the form of software, or implemented in one or more hardware modules or integrated circuits, or implemented in different network and/or processor apparatuses and/or microcontroller apparatuses.

The flow charts shown in the accompanying drawings are merely illustrative, and do not necessarily include all contents and operations/steps, nor do they necessarily be executed in the described order. For example, some operations/steps may be further decomposed, and some operations/steps may be combined or partially combined, so the actual execution order may be changed according to the actual situation.

In the description of the present disclosure, it should be understood that the terms "first" and "second" are used for descriptive purposes only, and shall not be construed as indicating or implying relative importance or implicitly indicating the number of the indicated technical features. Thus, a feature defined with "first" or "second" may explicitly or implicitly include one or more of such features. In the description of the present disclosure, unless otherwise specified, the meaning of "a plurality of" is two or more.

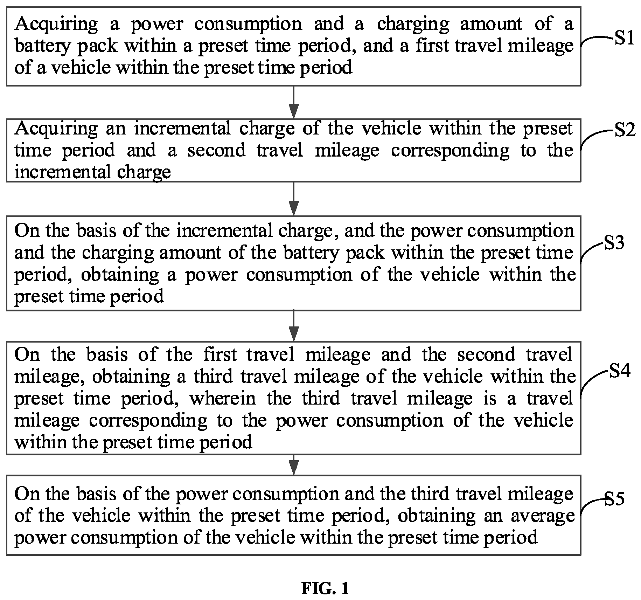

FIG. 1 shows a flow chart of a method for acquiring average power consumption according to some embodiments of the present disclosure, and the method for acquiring average power consumption may be executed by a device with computing and processing functions. Referring to FIG. 1, the method for acquiring average power consumption includes at least steps S1 to S5.

In step S1. Acquiring a power consumption and a charging amount of a battery pack within a preset time period, and a first travel mileage of a vehicle within the preset time period.

In some embodiments, the power consumption of the battery pack within the preset time period may be acquired through an instrument panel, or may also be acquired through a battery management system.

In the case that the vehicle is a series hybrid electric vehicle, the charging amount of the battery pack within the preset time period is a charging quantity of a charging pile. In the case that the vehicle is a series-parallel hybrid electric vehicle, the charging amount of the battery pack within the preset time period is the sum of the charging quantity of the charging pile and the power generation quantity of an engine of the vehicle, wherein the power generation quantity of the engine refers to the electric quantity generated by the engine driving a generator.

In some embodiments, the first travel mileage of the vehicle within the preset time period may be acquired through the instrument panel.

In step S2. Acquiring an incremental charge of the vehicle within the preset time period and a second travel mileage corresponding to the incremental charge.

In some embodiments, the incremental charge of the vehicle within the preset time period may be obtained according to the power consumption of the battery pack in a specific time period, wherein the specific time period may be a time period when the hybrid electric vehicle is in a series mode, a time period when the hybrid electric vehicle is in a parallel mode, or a time period when the engine of the hybrid electric vehicle is in a start-up state.

In step S3. On the basis of the incremental charge, and the power consumption and the charging amount of the battery pack within the preset time period, obtaining a power consumption of the vehicle within the preset time period.

The power consumption of the vehicle within the preset time period is calculated according to the above steps S1 to S3, and the influence of the incremental charge is eliminated, making the subsequent calculation of the average power consumption more accurate.

In step S4. On the basis of the first travel mileage and the second travel mileage, obtaining a third travel mileage of the vehicle within the preset time period, wherein the third travel mileage is a travel mileage corresponding to the power consumption of the vehicle within the preset time period.

In step S5. On the basis of the power consumption and the third travel mileage of the vehicle within the preset time period, obtaining an average power consumption of the vehicle within the preset time period.

In some embodiments, obtaining the power consumption of the vehicle within the preset time period on the basis of the incremental charge, and the power consumption and the charging amount of the battery pack within the preset time period includes: calculating the sum of the power consumption and the charging amount of the battery pack within the preset time period to obtain the power consumption of the vehicle within the preset time period; and calculating the difference between the power consumption of the vehicle within the preset time period and the incremental charge to obtain the power consumption of the vehicle within the preset time period, so that the calculated power consumption within the preset time period eliminates the incremental charge.

In some embodiments, obtaining the third travel mileage of the vehicle within the preset time period on the basis of the first travel mileage and the second travel mileage includes: calculating the difference between the first travel mileage and the second travel mileage to obtain the third travel mileage of the vehicle within the preset time period, thus eliminating the second travel mileage corresponding to the incremental charge from the first travel mileage of the vehicle within the preset time period.

In some embodiments, the power consumption of the battery pack within the preset time period is the difference between an initial electric quantity and a final electric quantity of the battery pack within the preset time period, the initial electric quantity of the battery pack within the preset time period is the electric quantity of the battery pack corresponding to the initial time point of the preset time period, and the final electric quantity of the battery pack within the preset time period is the electric quantity of the battery pack corresponding to the end time point of the preset time period. For example, the preset time period is from 15:00 to 18:00 on June 20, 2021, the initial time point of the preset time period is 15:00 on June 20, 2021, and the end time point of the preset time period is 18:00 on June 20, 2021.

In some embodiments, in the case that the vehicle is a series hybrid electric vehicle, the charging amount of the battery pack within the preset time period is the charging quantity of the charging pile, and the incremental charge within the preset time period is the power consumption of the battery pack when the engine is in operation. The power consumption of the battery pack when the engine is in operation is the difference between the initial electric quantity and the final electric quantity of the battery pack when the engine is in operation.

In some embodiments, the average power consumption of the series hybrid electric vehicle within the preset time period is calculated according to the following formula:

$$D_p = \frac{D_z + (D_c - D_j) + \sum_{i=1}^{n}(D_{fji} - D_{fci})}{L_y - \sum_{i=1}^{n}(L_{fji} - L_{fci})} \quad (1)$$

wherein $D_p$ is the average power consumption of the vehicle within the preset time period, $D_z$ is the charging quantity of the charging pile, $D_c$ is the initial electric quantity of the battery pack within the preset time period, $D_j$ is the final electric quantity of the battery pack within the preset time period, $n$ is the number of start-ups of the engine, $D_{fji}$ is the final electric quantity of the battery pack when the engine is started for the $i$-th time, $D_{fci}$ is the initial electric quantity of the battery pack when the engine is started for the $i$-th time, $L_y$ is the first travel mileage, $L_{fji}$ is the travel mileage of the vehicle when the operation of the engine started for the i-th time is ended, and $D_{fci}$ is the travel mileage of the vehicle when the operation of the engine started for the $i$-th time is initiated.

The average power consumption within the preset time period calculated according to the above formula (1) is the average power consumption of the series hybrid electric vehicle when the engine is not started, which eliminates the incremental charge when the engine is started, making the calculated average power consumption more accurate and facilitating the evaluation of the power economy of the series hybrid electric vehicle.

In some embodiments, in the case that the vehicle is a series-parallel hybrid electric vehicle, the charging amount of the battery pack within the preset time period is the sum of the charging quantity of the charging pile and the power generation quantity of the engine, and the incremental charge of the vehicle within the preset time period is the power consumption of the battery pack when the engine is in the parallel mode.

In some embodiments, the power consumption of the battery pack when the engine is in the parallel mode is the difference between the initial electric quantity and the final electric quantity of the battery pack when the engine is in the parallel mode.

In some embodiments of the present disclosure, the average power consumption of the series-parallel hybrid electric vehicle within the preset time period may be calculated according to the following formula:

$$D_p = \frac{D_z + D_f + (D_c - D_j) + \sum_{i=1}^{m}(D_{bji} - D_{bci})}{L_y - \sum_{i=1}^{m}(L_{bji} - L_{bci})} \quad (2)$$

wherein $D_p$ is the average power consumption of the vehicle within the preset time period, $D_z$ is the charging quantity of the charging pile, $D_f$ is the power generation quantity of the engine, $D_c$ is the initial electric quantity of the battery pack within the preset time period, $D_j$ is the final electric quantity of the battery pack within the preset time period, m is the number of parallel operations of the engine, $D_{bji}$ is the final electric quantity of the battery pack when the engine is in parallel operation for the $i$-th time, $D_{bci}$ is the initial electric quantity of the battery pack when the engine is in parallel operation for the $i$-th time, $L_y$ is the first travel mileage, $L_{bji}$ is the travel mileage of the vehicle when the parallel operation of the engine for the i-th time is ended, and $D_{bci}$ is the travel mileage of the vehicle when the parallel operation of the engine for the $i$-th time is initiated.

The average power consumption within the preset time period calculated according to the above formula (2) is the average power consumption of the series-parallel hybrid electric vehicle in the pure electric state, which eliminates the incremental charge when the engine is in the parallel mode, making the calculated average power consumption more accurate and facilitating the evaluation of the power economy of the series-parallel hybrid electric vehicle.

In some embodiments, the above method for acquiring average power consumption may be implemented through a visual data modeling platform, including the following steps: obtaining the power consumption of the vehicle within the preset time period on the basis of the power consumption and the charging amount of the battery pack within the preset time period, and the incremental charge within the preset time period; obtaining the third travel mileage of the vehicle within the preset time period on the basis of the first travel mileage and the second travel mileage, wherein the third travel mileage of the vehicle within the preset time period is a travel mileage corresponding to the power consumption of the vehicle within the preset time period; and obtaining the average power consumption of the vehicle within the preset time period on the basis of the power consumption and the third travel mileage of the vehicle within the preset time period.

In some embodiments, the visual data modeling platform may acquire the power consumption and the charging amount of the battery pack of the vehicle within the preset time period and the first travel mileage of the vehicle within the preset time period through a greenplum database, and acquire the incremental charge within the preset time period and the second travel mileage corresponding to the incremental charge through the greenplum database. Data is transmitted between the greenplum database and the vehicle through an intermediate layer, an mqtt client is arranged on the vehicle side, the intermediate layer includes an mqtt protocol and kafka, the mqtt client transmits data to kafka through the mqtt protocol, and kafka transmits data to the greenplum database.

The method for acquiring average power consumption implemented through the visual data modeling platform eliminates the electric quantity increment within the preset time period, making the calculation of the average power consumption of the vehicle within the preset time period more accurate and facilitating the evaluation of the power economy of the hybrid electric vehicle.

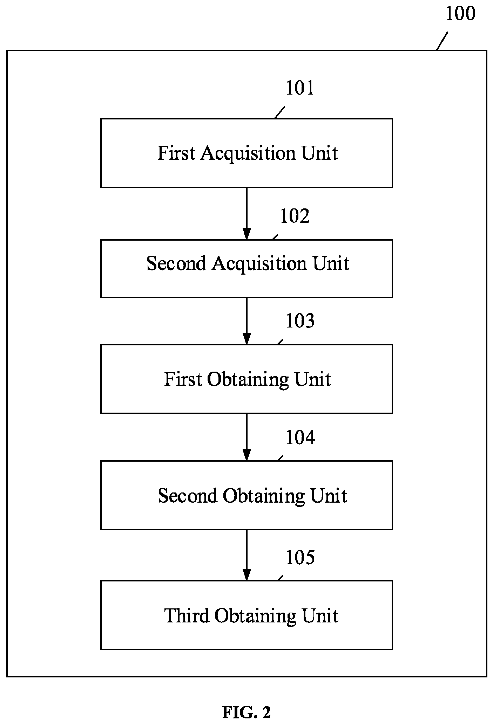

The present disclosure further provides an apparatus for acquiring average power consumption. FIG. 2 shows a block diagram of the apparatus for acquiring average power consumption according to some embodiments of the present disclosure. Referring to FIG. 2, the apparatus 100 for acquiring average power consumption includes: a first acquisition unit 101, configured to acquire a power consumption and a charging amount of a battery pack within a preset time period, and a first travel mileage of a vehicle within the preset time period; a second acquisition unit 102, configured to acquire an incremental charge of the vehicle within the preset time period, and a second travel mileage corresponding to the incremental charge; a first obtaining unit 103, configured to obtain a power consumption of the vehicle within the preset time period on the basis of the incremental charge, and the power consumption and the charging amount of the battery pack within the preset time period; a second obtaining unit 104, configured to obtain a third travel mileage of the vehicle within the preset time period on the basis of the first travel mileage and the second travel mileage, the third travel mileage being a travel mileage corresponding to the power consumption of the vehicle within the preset time period; and a third obtaining unit 105, configured to obtain an average power consumption of the vehicle within the preset time period on the basis of the power consumption and the third travel mileage of the vehicle within the preset time period.

In some embodiments, the first obtaining unit 103 is configured to: calculate the sum of the power consumption and the charging amount of the battery pack within the preset time period to obtain the power consumption of the vehicle within the preset time period; and calculate the difference between the power consumption of the vehicle within the preset time period and the incremental charge to obtain the power consumption of the vehicle within the preset time period.

In some embodiments, the first acquisition unit 101 is configured to: in the case that the vehicle is a series hybrid electric vehicle, take the charging quantity of a charging pile as the charging amount of the battery pack within the preset time period, where the incremental charge within the preset time period is the power consumption of the battery pack when the engine of the vehicle is in operation.

In some embodiments, the third obtaining unit 105 is configured to calculate the average power consumption of the vehicle within the preset time period according to the following calculation formula:

$$D_p = \frac{D_z + \left(D_c - D_j\right) + \sum_{i=1}^{n}\left(D_{fji} - D_{fci}\right)}{L_y - \sum_{i=1}^{n}\left(L_{fji} - L_{fci}\right)}$$

wherein $D_p$ is the average power consumption of the vehicle within the preset time period, $D_z$ is the charging quantity of the charging pile, $D_c$ is the initial electric quantity of the battery pack within the preset time period, $D_j$ is the final electric quantity of the battery pack within the preset time period, $n$ is the number of start-ups of the engine, $D_{fji}$ is the final electric quantity of the battery pack when the engine is started for the $i$-th time, $D_{fci}$ is the initial electric quantity of the battery pack when the engine is started for the $i$-th time, $L_y$ is the first travel mileage, $L_{fji}$ is the travel mileage of the vehicle when the operation of the engine started for the $i$-th time is ended, and $D_{fci}$ is the travel mileage of the vehicle when the operation of the engine started for the $i$-th time is initiated.

In some embodiments, the first acquisition unit 101 is configured to: in the case that the vehicle is a series-parallel hybrid electric vehicle, take the sum of the charging quantity of a charging pile and the power generation quantity of the engine of the vehicle as the charging amount of the battery pack within the preset time period, where the incremental charge of the vehicle within the preset time period is the power consumption of the battery pack when the engine is in parallel operation.

In some embodiments, the second acquisition unit 102 is further configured to: take the difference between the initial electric quantity and the final electric quantity of the battery pack when the engine is in parallel operation as the power consumption of the battery pack when the engine is in parallel operation.

In some embodiments, the average power consumption of the vehicle within the preset time period is calculated according to the following calculation formula:

$$D_p = \frac{D_z + D_f + \left(D_c - D_j\right) + \sum_{i=1}^{m}\left(D_{bji} - D_{bci}\right)}{L_y - \sum_{i=1}^{m}\left(L_{bji} - L_{bci}\right)}$$

wherein $D_p$ is the average power consumption of the vehicle within the preset time period, $D_z$ is the charging quantity of the charging pile, $D_f$ is the power generation quantity of the engine, $D_c$ is the initial electric quantity of the battery pack within the preset time period, $D_j$ is the final electric quantity of the battery pack within the preset time period, m is the number of parallel operations of the engine, $D_{bji}$ is the final electric quantity of the battery pack when the engine is in parallel operation for the $i$-th time, $D_{bci}$ is the initial electric quantity of the battery pack when the engine is in parallel operation for the $i$-th time, $L_y$ is the first travel mileage, $L_{bji}$ is the travel mileage of the vehicle when the parallel operation of the engine for the $i$-th time is ended, and $D_{bci}$ is the travel mileage of the vehicle when the parallel operation of the engine for the $i$-th time is initiated.

In some embodiments, the aforementioned first obtaining unit 103, second obtaining unit 104 and third obtaining unit 105 are implemented by a visual data modeling platform, and the implementation is achieved by means of drag-and-drop operations on the visual data modeling platform. For example, the data to be used is configured on the data side, then the data is dragged to the calculation side, and the data is connected in sequence by using visual operator components. Finally, the report data of the average power consumption and the like generated are written back to the data source, and the generated results are visible. It can be seen from the entire calculation process that no native code is written, and the power consumption calculation of the hybrid electric vehicle under different hybrid modes is realized through visual drag-and-drop operations.

In some embodiments, the first acquisition unit 101 and the second acquisition unit 102 acquire data through a greenplum database. Data is transmitted between the greenplum database and the vehicle (i.e., the vehicle side) through an intermediate layer. An mqtt client is arranged on the vehicle side, and the intermediate layer includes an mqtt protocol and kafka. The mqtt client transmits data to kafka through the mqtt protocol, and kafka transmits data to the greenplum database.

In some embodiments, during communication between the vehicle side and the cloud side, due to the problems of vehicle usage scenarios such as network delay and network instability, it is necessary to adopt a message protocol to design a short message component that can be sent asynchronously. The collection of raw data by using mqtt can solve the above problems. After the messages are collected from the vehicle side and stored in the mqtt client, since mqtt does not support querying messages according to their generation time nor does it support the semantic of exactly-once consumption, kafka is adopted for message transfer here. Kafka supports distinguishing messages according to the order of time (the business system can pull signal data for a custom time period), and at the same time provides the semantic of exactly-once consumption (which can ensure that the business system can obtain the data for sure and only obtain it once). Therefore, the use of kafka here can ensure the data accuracy of the business system and provide the ability to independently select and view signals in a specified time range. Finally, the signal data is stored in the greenplum database instead of relational databases such as MySQL which are traditionally adopted in the industry. The reason is that the greenplum database provides the capability of distributed reading and writing of hundreds of millions of data compared with relational databases. The number of signal types of modern electric vehicles has reached hundreds of thousands, and the generation frequency of signal data is extremely high. At present, it is known that a signal data can be generated every 50 ms. Therefore, when the number of vehicles expands sharply, the number of domain controllers on the vehicle side increases day by day, and the signal frequency becomes faster and faster, traditional relational databases can usually only support the reading and writing of hundreds of thousands of data per second and do not have the capability of distributed reading and writing, which will cause great delay and have a bottleneck in reading and writing performance during real-time calculation for users. The adoption of the greenplum database can easily cope with the update and development of the vehicle-side architecture.

In summary, the hybrid transmission mode of mqtt and kafka with final data storage in a greenplum database effectively solves the pain points in the communication between the vehicle side and the cloud side, such as unstable network environment on the vehicle side, the cloud side being unable to realize exactly-once consumption or independently read messages for any time period, and bottlenecks in data storage performance.

The present disclosure further provides a computer-readable storage medium having stored thereon a program product capable of implementing the above-described method for acquiring average power consumption in this specification. In some possible implementations, various aspects of the present disclosure may also be embodied in the form of a program product including program code which, when the program product is run on a terminal device, causes the terminal device to execute the steps of the method for acquiring average power consumption according to various exemplary implementations of the present disclosure as described in the above "Exemplary Method" section of this specification.

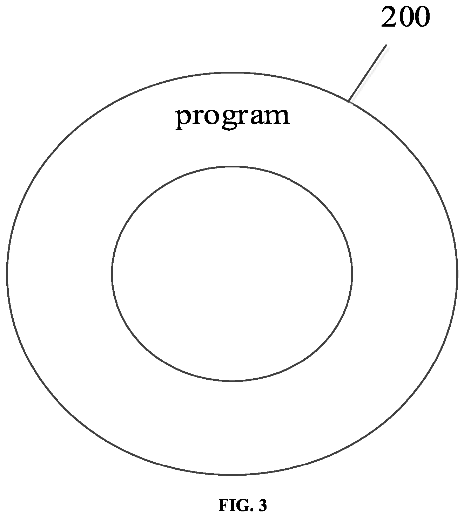

FIG. 3 is a schematic diagram of a computer-readable storage medium according to some embodiments of the present disclosure. Referring to FIG. 3, a program product 200 for implementing the above method according to an embodiment of the present disclosure is described, which may adopt a portable compact disc read-only memory (CD-ROM) and include program code, and may be run on a terminal device such as a personal computer. However, the program product of the present disclosure is not limited thereto, and in this document, a readable storage medium may be any tangible medium that contains or stores a program which can be used by or in connection with an instruction execution system, apparatus or device.

The program product may adopt any combination of one or more readable media. The readable medium may be a readable signal medium or a readable storage medium. A readable storage medium may be, for example, but not limited to, an electrical, magnetic, optical, electromagnetic, infrared, or semiconductor system, apparatus or device, or any combination thereof. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

A computer-readable signal medium may include a data signal propagated in baseband or as part of a carrier wave, carrying readable program code therein. Such a propagated data signal may take a variety of forms, including but not limited to an electromagnetic signal, an optical signal, or any suitable combination thereof. A readable signal medium may also be any readable medium other than a readable storage medium that can send, propagate or transmit a program for use by or in connection with an instruction execution system, apparatus or device.

The program code contained on the readable medium may be transmitted by any appropriate medium, including but not limited to wireless, wired, optical fiber cable, RF, etc., or any suitable combination thereof.

The program code for performing the operations of the present disclosure may be written in any combination of one or more programming languages, including object-oriented programming languages such as Java, C++, etc., as well as conventional procedural programming languages such as the "C" language or similar programming languages. The program code may execute entirely on the user's computing device, partly on the user's device, as a stand-alone software package, partly on the user's computing device and partly on a remote computing device, or entirely on the remote computing device or server. In the case of a remote computing device, the remote computing device may be connected to the user's computing device through any kind of network, including a local area network (LAN) or a wide area network (WAN), or may be connected to an external computing device (e.g., through the Internet using an Internet service provider).

The present disclosure further provides an electronic device capable of implementing the above-described method.

Those skilled in the art can understand that various aspects of the present disclosure may be implemented as a system, method or program product. Accordingly, various aspects of the present disclosure may be embodied in the form of: an entirely hardware implementation, an entirely software implementation (including firmware, microcode, etc.), or a combination of hardware and software aspects, which may be collectively referred to herein as a "circuit", "module" or "system".

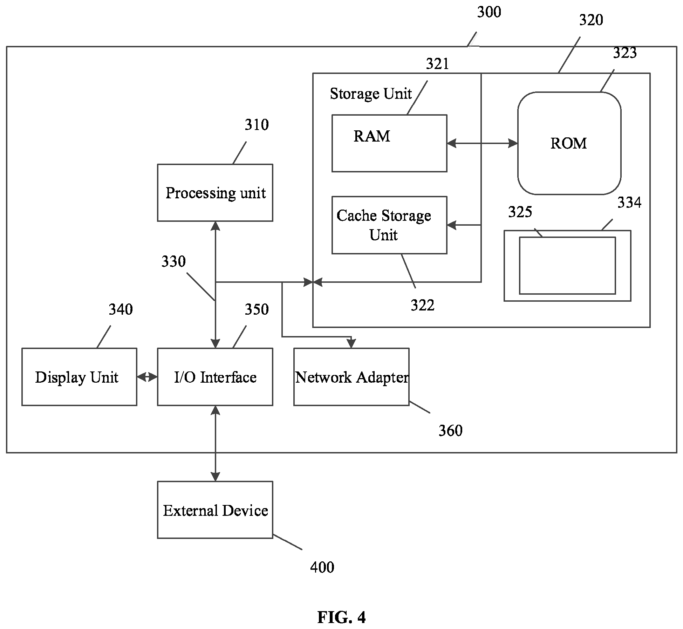

FIG. 4 is a structural schematic diagram of an electronic device according to some embodiments of the present disclosure. An electronic device 300 according to some embodiments of the present disclosure is described below with reference to FIG. 4. The electronic device 300 shown in FIG. 4 is merely an example and should not impose any limitation on the functions and scope of use of the embodiments of the present disclosure. As shown in FIG. 4, the electronic device 300 is embodied in the form of a general-purpose computing device. Components of the electronic device 300 may include, but are not limited to: at least one processing unit 310 described above, at least one storage unit 320 described above, and a bus 330 connecting different system components (including the storage unit 320 and the processing unit 310).

The storage unit 320 stores program code which can be executed by the processing unit 310, causing the processing unit 310 to execute the steps of the method for acquiring average power consumption according to various exemplary implementations of the present disclosure as described in the above "Embodiment Method" section of this specification. The storage unit 320 may include a readable medium in the form of a volatile storage unit, such as a random access storage unit (RAM) 321 and/or a cache storage unit 322, and may further include a read-only storage unit (ROM) 323.

The storage unit 320 may also include a program/utilities 324 having a set of (at least one) program modules 325, such program modules 325 including, but not limited to: an operating system, one or more application programs, other program modules, and program data, each or some combination of which may include an implementation of a network environment.

The bus 330 may represent one or more of several types of bus structures, including a storage unit bus or a storage unit controller, a peripheral bus, an accelerated graphics port, a processing unit, or a local bus using any of a variety of bus structures.

The electronic device 300 may also communicate with one or more external devices 400 (e.g., a keyboard, a pointing device, a Bluetooth device, etc.), may also communicate with one or more devices that enable a user to interact with the electronic device 300, and/or may communicate with any device that enables the electronic device 300 to communicate with one or more other computing devices (e.g., a router, a modem, etc.). Such communication may be performed via an input/output (I/O) interface 350. Moreover, the electronic device 300 may also communicate with one or more networks (e.g., a local area network (LAN), a wide area network (WAN) and/or a public network such as the Internet) via a network adapter 360. As shown in the figure, the network adapter 360 communicates with other modules of the electronic device 300 via the bus 330. It should be understood that although not shown in the figure, other hardware and/or software modules may be used in conjunction with the electronic device 300, including but not limited to: microcode, device drivers, redundant processing units, external disk drive arrays, RAID systems, tape drives, and data backup storage systems.

The present disclosure further provides a computer program product including computer instructions which, when executed by a processor, implement the above-described method for acquiring average power consumption.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope and spirit of the present disclosure and the appended claims. For example, due to the nature of software, the functions described above may be implemented using software executed by a processor, hardware, firmware, hardwiring, or any combination thereof. In addition, each functional unit may be integrated into one processing unit, or each unit may exist physically alone, or two or more units may be integrated into one unit.

In the several embodiments provided by the present disclosure, it should be understood that the disclosed technical content may be implemented in other ways. The device embodiments described above are merely schematic, for example, the division of the units may be a logical function division, and in actual implementation, there may be other division modes, for example, multiple units or components may be combined or integrated into another system, or some features may be omitted or not executed. In addition, the coupling or direct coupling or communication connection shown or discussed may be an indirect coupling or communication connection through some interfaces, units or modules, and may be in an electrical or other form.

The units described as separate components may or may not be physically separated, and the components used as control devices may or may not be physical units, that is, they may be located in one place, or may be distributed to multiple units. Some or all of the units may be selected according to actual needs to achieve the purpose of the solution of this embodiment.

If the integrated unit is implemented in the form of a software functional unit and sold or used as an independent product, it may be stored in a computer-readable storage medium. Based on such an understanding, the technical solution of the present disclosure, in essence, or the part that contributes to the prior art, or all or part of the technical solution, may be embodied in the form of a software product, which is stored in a storage medium and includes several instructions to cause a computer device (which may be a personal computer, a server, a network device, etc.) to execute all or part of the steps of the method described in each embodiment of the present disclosure. The aforementioned storage medium includes: a USB flash drive, a read-only memory (ROM), a random access memory (RAM), a mobile hard disk, a magnetic disk, an optical disc, and other various media that can store program code.

The above are merely embodiments of the present disclosure and are not intended to limit the present disclosure. For those skilled in the art, the present disclosure may have various modifications and changes. Any modification, equivalent replacement, improvement, etc., made within the spirit and principle of the present disclosure shall be included in the scope of the claims of the present disclosure.

**Claims**

1.    A method for acquiring an average power consumption, comprising:

acquiring a power consumption and a charging amount of a battery pack within a preset time period, and a first travel mileage of a vehicle within the preset time period;
acquiring an incremental charge of the vehicle within the preset time period and a second travel mileage corresponding to the incremental charge;
on the basis of the incremental charge, and the power consumption and the charging amount of the battery pack within the preset time period, obtaining a power consumption of the vehicle within the preset time period;
on the basis of the first travel mileage and the second travel mileage, obtaining a third travel mileage of the vehicle within the preset time period, the third travel mileage being a travel mileage corresponding to the power consumption of the vehicle within the preset time period;
on the basis of the power consumption and the third travel mileage of the vehicle within the preset time period, obtaining an average power consumption of the vehicle within the preset time period.

2.    The method for acquiring average power consumption according to claim 1, **characterized in that** the step of obtaining a power consumption of the vehicle within the preset time period on the basis of the incremental charge, and the power consumption and the charging amount of the battery pack within the preset time period comprises:

calculating the sum of the power consumption and the charging amount of the battery pack within the preset time period to obtain a power consumption of the vehicle within the preset time period; and
calculating the difference between the power consumption of the vehicle within the preset time period and the incremental charge to obtain the power consumption of the vehicle within the preset time period.

3.    The method for acquiring average power consumption according to claim 1, **characterized in that** when the vehicle is a series hybrid electric vehicle, the charging amount of the battery pack within the preset time period is the charging quantity of a charging pile, and the incremental charge within the preset time period is the power consumption of the battery pack when the engine of the vehicle is in operation.

4. The method for acquiring average power consumption according to claim 3, **characterized in that** the average power consumption of the vehicle within the preset time period is calculated according to the following formula:

$$D_p = \frac{D_z + \left(D_c - D_j\right) + \sum_{i=1}^{n}\left(D_{fji} - D_{fci}\right)}{L_y - \sum_{i=1}^{n}\left(L_{fji} - L_{fci}\right)}$$

wherein $D_p$ is the average power consumption of the vehicle within the preset time period, $D_z$ is the charging quantity of the charging pile, $D_c$ is the initial electric quantity of the battery pack within the preset time period, $D_j$ is the final electric quantity of the battery pack within the preset time period, $n$ is the number of start-ups of the engine, $D_{fji}$ is the final electric quantity of the battery pack when the engine is started for the $i$-th time, $D_{fci}$ is the initial electric quantity of the battery pack when the engine is started for the $i$-th time, $L_y$ is the first travel mileage, $L_{fji}$ is the travel mileage of the vehicle when the operation of the engine started for the $i$-th time is ended, and $D_{fci}$ is the travel mileage of the vehicle when the operation of the engine started for the $i$-th time is initiated.

5. The method for acquiring average power consumption according to claim 1, **characterized in that** when the vehicle is a series-parallel hybrid electric vehicle, the charging amount of the battery pack within the preset time period is the sum of the charging quantity of a charging pile and the power generation quantity of the engine of the vehicle, and the incremental charge of the vehicle within the preset time period is the power consumption of the battery pack when the engine is in parallel operation.

6. The method for acquiring average power consumption according to claim 5, **characterized in that** the power consumption of the battery pack when the engine is in parallel operation is the difference between the initial electric quantity and the final electric quantity of the battery pack when the engine is in parallel operation.

7. The method for acquiring average power consumption according to claim 5, **characterized in that** the average power consumption of the vehicle within the preset time period is calculated according to the following formula:

$$D_p = \frac{D_z + D_f + \left(D_c - D_j\right) + \sum_{i=1}^{m}\left(D_{bji} - D_{bci}\right)}{L_y - \sum_{i=1}^{m}\left(L_{bji} - L_{bci}\right)}$$

wherein $D_p$ is the average power consumption of the vehicle within the preset time period, $D_z$ is the charging quantity of the charging pile, $D_f$ is the power generation quantity of the engine, $D_c$ is the initial electric quantity of the battery pack within the preset time period, $D_j$ is the final electric quantity of the battery pack within the preset time period, m is the number of parallel operations of the engine, $D_{bji}$ is the final electric quantity of the battery pack when the engine is in parallel operation for the $i$-th time, $D_{bci}$ is the initial electric quantity of the battery pack when the engine is in parallel operation for the $i$-th time, $L_y$ is the first travel mileage, $L_{bji}$ is the travel mileage of the vehicle when the parallel operation of the engine for the $i$-th time is ended, and $D_{bci}$ is the travel mileage of the vehicle when the parallel operation of the engine for the $i$-th time is initiated.

8. An apparatus for acquiring an average power consumption, comprising:

a first acquisition unit, configured to acquire a power consumption and a charging amount of a battery pack within a preset time period, and a first travel mileage of a vehicle within the preset time period;
a second acquisition unit, configured to acquire an incremental charge of the vehicle within the preset time period and a second travel mileage corresponding to the incremental charge;
a first obtaining unit, configured to obtain a power consumption of the vehicle within the preset time period on the basis of the incremental charge, and the power consumption and the charging amount of the battery pack within the preset time period;
a second obtaining unit, configured to obtain a third travel mileage of the vehicle within the preset time period on the basis of the first travel mileage and the second travel mileage, the third travel mileage being a travel mileage corresponding to the power consumption of the vehicle within the preset time period; and
a third obtaining unit, configured to obtain an average power consumption of the vehicle within the preset time period on the basis of the power consumption and the third travel mileage of the vehicle within the preset time period.

9. A computer-readable storage medium, having a computer program stored thereon, the computer program comprising executable instructions which, when executed by a processor, cause the processor to implement the method for acquiring average power consumption according to any one of claims 1 to 7.

10. An electronic device, comprising:

   one or more processors;
   a memory for storing executable instructions of the processors, wherein when the executable instructions are executed by the one or more processors, the one or more processors are caused to implement the method for acquiring an average power consumption according to any one of claims 1 to 7.

11. A computer program product, **characterized in that** the computer program product comprises computer instructions which, when executed by a processor, implement the method for acquiring an average power consumption according to any one of claims 1 to 7.

Acquiring a power consumption and a charging amount of a battery pack within a preset time period, and a first travel mileage of a vehicle within the preset time period ⟋S1

Acquiring an incremental charge of the vehicle within the preset time period and a second travel mileage corresponding to the incremental charge ⟋S2

On the basis of the incremental charge, and the power consumption and the charging amount of the battery pack within the preset time period, obtaining a power consumption of the vehicle within the preset time period ⟋S3

On the basis of the first travel mileage and the second travel mileage, obtaining a third travel mileage of the vehicle within the preset time period, wherein the third travel mileage is a travel mileage corresponding to the power consumption of the vehicle within the preset time period ⟋S4

On the basis of the power consumption and the third travel mileage of the vehicle within the preset time period, obtaining an average power consumption of the vehicle within the preset time period ⟋S5

FIG. 1

100

101

First Acquisition Unit

102

Second Acquisition Unit

103

First Obtaining Unit

104

Second Obtaining Unit

105

Third Obtaining Unit

**FIG. 2**

FIG. 3

**FIG. 4**

## INTERNATIONAL SEARCH REPORT

| International application No. |
| --- |
| **PCT/CN2024/120150** |

| A. | CLASSIFICATION OF SUBJECT MATTER |
| --- | --- |

B60L3/12(2006.01)i; B60L58/12(2019.01)i

According to International Patent Classification (IPC) or to both national classification and IPC

| B. | FIELDS SEARCHED |
| --- | --- |

Minimum documentation searched (classification system followed by classification symbols)

IPC:B60L3; B60L58

Documentation searched other than minimum documentation to the extent that such documents are included in the fields searched

Electronic data base consulted during the international search (name of data base and, where practicable, search terms used)

CNTXT, CNKI, ENTXTC, DWPI, VEN: 充电量, 电耗, 电量, 增量, 发动机, 耗电, 混合, 动力, 里程, 平均电耗, 预设时段, 预设时间, average, power, consumed, electric, quantity, charging, battery, pack, preset, time, period, incremental

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117227485 A (VOYAH AUTOMOBILE TECHNOLOGY CO., LTD.) 15 December 2023 (2023-12-15) <br> claims 1-10, description, specific embodiments, and figures 1-4 | 1-11 |
| A | CN 105253024 A (JASMIN INTERNATIONAL AUTO R&D (BEIJING) CO., LTD.) 20 January 2016 (2016-01-20) <br> description, paragraphs 56-125, and figures 1-3 | 1-11 |
| A | CN 104527450 A (ANHUI ANKAI AUTOMOBILE CO., LTD.) 22 April 2015 (2015-04-22) <br> entire document | 1-11 |
| A | CN 109795369 A (ZHENGZHOU BAK NEW ENERGY AUTOMOBILE CO., LTD.) 24 May 2019 (2019-05-24) <br> entire document | 1-11 |
| A | CN 112519583 A (SHANGHAI OFILM INTELLIGENT VEHICLE CO., LTD.) 19 March 2021 (2021-03-19) <br> entire document | 1-11 |
| A | US 2012109408 A1 (SIY TEDDY et al.) 03 May 2012 (2012-05-03) <br> entire document | 1-11 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 December 2024** | **06 January 2025** |

| Name and mailing address of the ISA/CN <br><br> **China National Intellectual Property Administration (ISA/CN)** <br> **China No. 6, Xitucheng Road, Jimenqiao, Haidian District, Beijing 100088** | Authorized officer <br><br><br><br> Telephone No. |
| --- | --- |

Form PCT/ISA/210 (second sheet) (July 2022)

**INTERNATIONAL SEARCH REPORT**

| International application No. |
| --- |
| **PCT/CN2024/120150** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2022111496 A1 (CHINA FAW CO., LTD.) 02 June 2022 (2022-06-02)<br>entire document | 1-11 |

Form PCT/ISA/210 (second sheet) (July 2022)

**INTERNATIONAL SEARCH REPORT**
Information on patent family members

| | International application No. |
| --- | --- |
| | **PCT/CN2024/120150** |

| Patent document cited in search report | | | Publication date (day/month/year) | Patent family member(s) | | | Publication date (day/month/year) |
| --- | --- | --- | --- | --- | --- | --- | --- |
| CN | 117227485 | A | 15 December 2023 | None | | | |
| CN | 105253024 | A | 20 January 2016 | None | | | |
| CN | 104527450 | A | 22 April 2015 | None | | | |
| CN | 109795369 | A | 24 May 2019 | None | | | |
| CN | 112519583 | A | 19 March 2021 | None | | | |
| US | 2012109408 | A1 | 03 May 2012 | US | 8433455 | B2 | 30 April 2013 |
| | | | | DE | 102011054457 | A1 | 03 May 2012 |
| WO | 2022111496 | A1 | 02 June 2022 | None | | | |

Form PCT/ISA/210 (patent family annex) (July 2022)

**REFERENCES CITED IN THE DESCRIPTION**

**Patent documents cited in the description**

- CN 202311230198